Europäisches Patentamt

European Patent Office

Office européen des brevets

(11) Numéro de publication : **0 481 870 A1**

# (12) DEMANDE DE BREVET EUROPEEN

(21) Numéro de dépôt : **91402742.0**

(22) Date de dépôt : **14.10.91**

(51) Int. Cl.⁵ : **A01G 9/14**

(30) Priorité : **18.10.90 FR 9012917**

(43) Date de publication de la demande :
**22.04.92 Bulletin 92/17**

(84) Etats contractants désignés :
**ES IT**

(71) Demandeur : **SARET FRANCE - PPB (S.A.)**
**Route de Carpentras**
**F-84132 Le Pontet Cédex (FR)**

(72) Inventeur : **Biancone, Georges**
**Domaine de la Serre, Rue du Château**
**F-84700 Sorgues (FR)**
Inventeur : **Augier, Robert**
**Chemin des Carrières**
**F-84700 Sorgues (FR)**

(74) Mandataire : **Bugnon-Hays, Claudine**
**PATCO S.A. 39, Boulevard René Cassin B.P.4**
**F-84170 Monteux (FR)**

(54) **Abri pour cultures.**

(57) L'invention concerne un abri pour les cultures notamment les cultures maraîchères et florales destiné à protéger celles-ci à la fois des intempéries telles que le vent la grêle et la pluie, du soleil, des oiseaux et des insectes. L'abri est constitué d'un réseau de poteaux 1 et de poteaux périphériques 13 disposés selon un repère orthogonal recouvert par un réseau 3 de câbles. Le réseau 3 de câbles est constitué de câbles 12 formant un réseau triangulé, de câbles 6 disposés selon les lignes de faîtage 16 et des lignes basses 17 et d'un câble périphérique 15. Un filet périphérique 14 est disposé autour de l'abri.

FIG. 2

EP 0 481 870 A1

L'invention concerne un abri pour cultures destiné à protéger celles-ci à la fois des intempéries, notamment du vent, de la grêle ou de la pluie, du soleil, et des oiseaux.

On sait combien les cultures, tant sur le plan de leur qualité que sur le plan de leur rendement sont tributaires des facteurs naturels. En particulier le marché des cultures florales ou maraîchères impose d'obtenir des végétaux possédant le plus bel aspect possible et un problème essentiel posé par ces cultures est de les protéger.

Pour remédier à ce problème il a été proposé plusieurs solutions techniques. La plus efficace de ces solutions mais aussi la plus chère consiste à couvrir les cultures de serres en verre ou, a défaut, mettant en oeuvre un matériau plastique. Outre le fait que ces serres atteignent des coûts très élevés, particulièrement lorsqu'elles ont une hauteur permettant la cueillette, elles présentent également l'inconvénient de devoir être couplées à un système d'irrigation ce qui accroît encore le coût de l'équipement. De plus, ces serres peuvent être détériorées en cas de forte grêle et provoquer, particulièrement dans le cas de serres en verre, la destruction des cultures protégée, et l'inutilisation du sol rempli de débris de verre.

Dans le but de protéger les cultures du soleil, il est connu d'utiliser des abris constitués de piquets amarrés au sol et reliés entre eux par des câbles sur lesquels sont disposés des filets. Ce type d'abris de l'état de la technique présente l'inconvénient majeur de ne pas être stable, malgré une grande densité de piquets qui constitue par ailleurs une gêne à la circulation des engins.

En effet, les piquets sont soumis à la fois à des forces verticales engendrées notamment par le poids du filet et à des forces non verticales d'origines diverses. Ainsi, la déstabilisation d'un des piquets peut entraîner la déstabilisation de l'ensemble de l'édifice ; c'est pourquoi il est nécessaire d'amarrer les piquets ou encore de les enfoncer profondément dans le sol. De plus, les filets de ces abris, de par leur positionnement généralement selon une pente supérieure à 40%, sur les piquets, résistent généralement mal à l'accumulation massive de grêle lors de précipitations abondantes, phénomène qui peut entrainer leur rupture. De plus, si ces abris présentent une relative efficacité pour protéger les cultures du soleil, ils sont généralement équipés de filets laissant passer les gouttes de pluie sans les briser et ne sont pas très efficaces pour protéger les cultures des fortes averses. Enfin, ces abris ont une prise au vent importante ce qui favorise le faseyage du filet et accélère son usure. Ces efforts importants peuvent, dans certains cas, ne pas être supportés par les sols meubles.

Il existe par ailleurs des dispositifs permettant de protéger les cultures du vent, dispositifs qui peuvent entourer ces cultures ou être disposés selon une ou plusieurs directions correspondant aux vents dominants. Ainsi il a été proposé un brise-vent pouvant être utilisé dans la protection des cultures décrit dans le brevet français n°85 12603.

Cependant, il n'existe pas actuellement d'abri pour cultures protégeant efficacement celles-ci, à la fois des intempéries et du soleil. L'objet de la présente invention est de proposer un abri pour cultures protégeant celles-ci du soleil, du vent, de la pluie, de la grêle et pouvant être clos de façon à les protéger également des oiseaux et présentant de nombreux avantages dont le premier est d'être auto-portant. Un autre avantage de cet abri pour cultures est de pouvoir être clos et donc de protéger les végétaux de tout vent, quelque soit sa direction, et d'offrir en plus une protection contre les oiseaux et insectes (criquets) qui peuvent endommager gravement, notamment les cultures fruitières.

Un autre avantage réside dans le fait que le nombre de piquets est réduit, ce qui facilite le passage des engins et augmente le rendement de surface cultivée.

L'abri pour cultures selon l'invention est constitué d'un réseau de poteaux positionnés verticalement et selon des lignes perpendiculaires entre elles formant un repère orthogonal. Une résille de câbles pouvant être consituée de câbles d'acier tressés entre eux est tendue sur ces poteaux. Cette résille reçoit des filets dont la porosité à l'air et la lumière est adaptée aux besoins. Les filets qui peuvent être mis en oeuvre dans le cadre de la présente invention sont ceux qui laissent passer une fraction du vent incident et cassent les gouttes de pluie de façon à obtenir à l'intérieur de l'abri des précipitations dont la force est fortement diminuée.

L'abri selon l'invention possède les caractéristiques essentielles suivantes:

– les poteaux utilisés sont munis, en leur partie supérieure de deux passages se présentant sous la forme d'évidements cylindriques parallèles disposés l'un au dessous de l'autre. Ces passages permettent la formation d'un réseau triangulé de câbles définissant des lignes de faîtage et des lignes basses.

Pour former ce réseau triangulé, les câbles sont intoduits alternativement dans le passage supérieur puis dans le passage inférieur du poteau suivant.

– Les poteaux sont munis en leur extrémité d'un troisième passage se présentant également sous la forme d'un évidement cylindrique permettant la disposition de câbles selon les lignes de faîtage, de façon perpendiculaire au réseau triangulé.

– D'autres câbles sont également disposés de façon perpendiculaire au réseau triangulé selon les lignes basses.

– L'abri est délimité dans sa periphérie par une ceinture constituée de poteaux périphériques munis dans leur partie supérieure d'un passage permettant la disposition d'un câble périphérique et équipé partiellement ou intégralement d'un filet périphérique.

– Seuls les poteaux périphériques sont ancrés au sol grâce à des câbles prenant appui sur des plots d'ancrage en béton.

– La disposition de tous les câbles dans les poteaux est rendue fixe grâce à des serre-câbles.

Les serre-câbles sont utilisés de part et d'autre des passages existant dans les poteaux pour qu'aucun mouvement relatif n'apparaisse entre poteaux et câbles. Ceci permet d'obtenir un système mécaniquement analogue à un sytème poutres-treillis. Contrairement aux abris qui étaient connus de l'état de la technique, l'abri selon l'invention est auto-portant et ne nécessite pas d'ancrer chaque poteau par du béton ou en l'enfonçant profondément dans le sol.

Additionnellement, les câbles disposés selon les lignes basses de l'abri peuvent également être solidarisés aux câbles formant le réseau triangulé au niveau des croisillons correspondant aux points où les câbles du réseau triangulé se rencontrent. Ceci a pour effet d'améliorer l'auto-portabilité de l'abri.

Les lignes de faîtage et les lignes basses délimitent des surfaces sur lesquelles des filets sont disposés. Préférentiellement les filets sont disposés parallèlement aux câbles constituant ces lignes de faîtage et ces lignes basses, et possèdent une largeur correspondant à la distance comprise entre une ligne de faîtage et la ligne basse voisine. Ainsi, le filet ne couvre aucune arête ce qui a pour effet de rallonger sa durée de vie.

Bien que les filets puissent être solidarisés aux câbles par tout moyen, il est particulièrement intéressant de disposer le long des filets des agrafes munies d'un clip du type de celles commercialisées par la Société EMIS FRANCE, couplées à un crochet . L'utilisation de telles agrafes avec crochets a pour avantages de permettre au filet de se décrocher localement lorsque le poids qu'il supporte est trop important et d'évacuer ponctuellement la surcharge. Ceci est particulièrement avantageux, notamment en cas de grêle.

Afin de permettre à la ceinture de l'abri de clore celui-ci, la hauteur des poteaux périphériques une fois plantés, correspond sensiblement à la hauteur à laquelle se situent les lignes basses. Les poteaux périphériques étant les seuls à être solidement ancrés au sol grâce aux câbles prenant appui dans des plots d'ancrage en béton, il est possible de les positionner de différentes façon. Ainsi, une solution consiste à les positionner verticalement et une solution améliorée consiste à les positionner de façon à ce qu'ils soient inclinés vers l'extérieur de l'abri, cette inclinaison renforçant encore la stabilité de l'abri.

Egalement, ces poteaux périphériques sont préférentiellement solidarisés au sol par deux câbles de tension formant un tripode reliés à des chaînes de tension elles-mêmes reliées aux plots d'ancrage.

Afin de faciliter l'accrochage des câbles du réseau triangulé et des câbles délimitant les lignes basses et les lignes de faîtage aux poteaux périphériques, ces câbles sont terminés à chacune de leurs extrémités par une élingue. Pour faciliter l'accrochage de l'élingue, les poteaux périphériques peuvent être munis a leur extrémité supérieure d'un trou équipé d'une clavette.

Préférentiellement, la distance sur chaque poteau entre les passages permettant le positionnement des câbles du réseau triangulé et, par ailleurs, la distance des lignes de faîtage et les lignes basses sont telles que la pente des filets est comprise entre 5 et 15%.

L'invention ainsi que les divers avantages qu'elle procure seront plus facilement compris grâce à l'exemple de réalisation non-limitatif de l'invention décrit dans les dessins annexés dans lesquels :

– les figures 1 et 2 représentent la construction d'un abri pour cultures selon la présente invention ;
– la figure 3 représente une vue de la partie supérieure d'un poteau traversé par les câbles délimitant la ligne de faîtage et le réseau triangulé,
– la figure 4 représente la partie supérieure d'un poteau périphérique muni de ces différents câbles ;
– et la figure 5 représente une vue d'un plot d'ancrage.

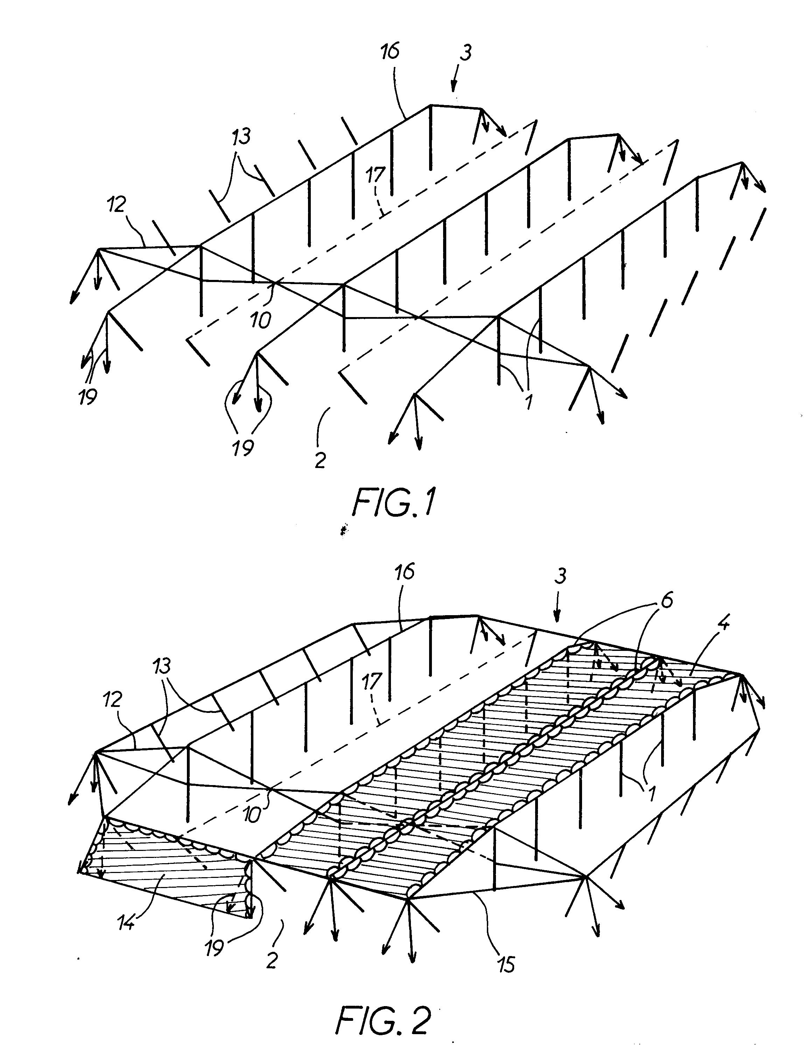

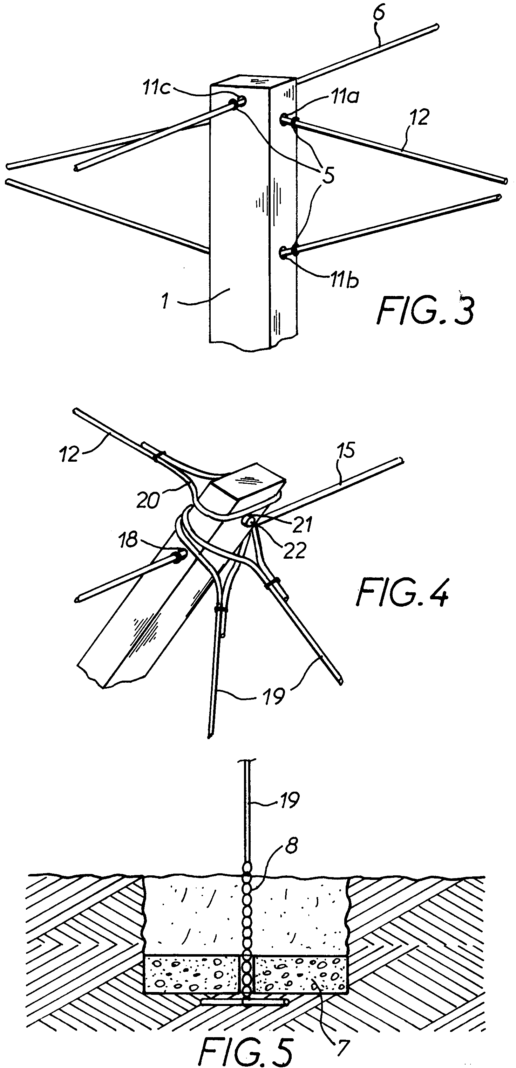

Selon la figure 1 un terrain constitué par un quadrilatère de trente mètres sur trente mètres est équipé d'un abri selon la présente invention. Dans ce but, des poteaux 1 sont implantés selon des lignes espacées régulièrement entre elles d'une distance de six mètres, la distance entre deux poteaux 1 adjacents de la même ligne étant de trois mètres. Les poteaux sont plantés en utilisant un perfo-planteur tel que celui décrit dans la demande de brevet sous le numéro 77 32508. Comme on peut le voir sur la figure 3 ces poteaux 1 sont munis de deux passages 11a, 11b parallèles disposés l'un au dessous de l'autre et d'un troisième passage perpendiculaire 11c. Ces poteaux 1 n'ayant à subir que des forces verticales , ils possèdent une section relativement faible. En l'occurence, les poteaux ont une section carrée de dix centimètres sur dix centimètres. La hauteur des poteaux une fois plantés est de 4,5 mètres.

Dans la périphérie 2 de l'abri, des poteaux 13 sont ancrés au sol de façon à être positionnés dans l'alignement des poteaux 1. Des poteaux 13 supplémentaires sont ajoutés de façon à ce que l'ensemble de la périphérie de l'abri soit équipé de poteaux régulièrement espacés. Les poteaux 13 sont ancrés au sol de façon à présenter une inclinaison de 45° vers l'extérieur de l'abri.

Des cables 12 sont ensuite introduits dans les passages 11a, 11b des poteaux 1 alternativement dans le passage supérieur 11a d'un poteau puis dans le passage inférieur 11b du poteau suivant de façon à former un réseau de câbles 12 triangulé. Les câbles 12 sont solidarisés aux poteaux 13 périphériques par des élingues 20. Des câbles 6 sont ensuite disposés sur les lignes de faîtage 16 et les lignes basses 17 de façon perpendiculaire au réseau triangulé de câbles 12. Ces câbles 6 sont également solidarisés aux poteaux 13 périphériques par des élingues 20. L'ensemble de la résille 3 de câbles ainsi formée est équilibré en tendant les câbles de tension 19 des poteaux périphériques 13. La tension de ces câbles est elle-même contrôlée par des chaînes de tension 8 elles-mêmes reliées à des plots d'ancrage 7 en béton comme on peut le voir sur la figure 5.

Des serre-câbles 5 sont ensuite positionnés de part et d'autre des poteaux et au niveau des croisillons 10 de façon à solidariser les câbles 6, 12 aux poteaux 1. Une fois ces serre-câbles fixés, le réseau de câbles 12 fonctionne de façon analogue à un système poutres-treillis.

Conformément à la figure 3, un câble périphérique 15 est introduit dans le passage 18 de chaque poteau périphérique 13 de façon à former une ceinture. Comme on peut le voir sur la figure 4, ces poteaux périphériques sont munis dans leur partie supérieure d'un trou 21 permettant la fixation d'une clavette 22. Les clavettes permettent aux élingues 20 des câbles de tension 19, des câbles 12 du réseau triangulé et des câbles 6 d'être solidarisés aux poteaux périphériques 13.

Des filets 4 ayant une largeur d'environ six mètres sont munis sur leur pourtour d'agrafes munies d'un clip et accrochées à la résille 3 de câbles, parallèlement aux lignes de faîtage 16 et aux lignes basses 17. Les filets 4 prennent ainsi une inclinaison par rapport à l'horizontal de 12%. Les agrafes utilisées permettent au filet de se décrocher localement lorsque celui-ci supporte une charge trop forte.

Enfin, divers filets périphériques 14 dont un seul est représenté à la figure 2 sont disposés sur le pourtour de l'abri de façon à clore celui-ci. A l'instar des filets 4, les filets périphériques 14 sont munis dans leur partie supérieure d'agrafes permettant leur accrochage au câble périphérique 15 et sur leurs côtés d'agrafes permettant leur accrochage sur les fils de tension 19. Il est ainsi facile, une fois tous les filets 14 positionnés de décrocher certaines des agrafes fixées aux câbles de tension 19 de façon à pouvoir pénétrer sous l'abri.

## Revendications

1. Abri pour cultures constitué d'un réseau de poteaux (1) verticaux disposés selon un repère orthogonal sur lequel est tendue une résille de câbles (3) recevant des filets (4) pouvant posséder une porosité variable caractérisé en ce que les poteaux (1) sont munis en leur partie supérieure de deux passages (11a, 11b) parallèles disposes l'un au dessous de l'autre permettant la formation d'un réseau triangule de câbles (12) définissant des lignes de faîtage (16) et des lignes basses (17) et d'un troisième passage (11c) situé en leur extrémité permettant la disposition perpendiculaire de câbles (6) selon les lignes de faîtage (16), d'autres câbles (6) étant par ailleurs disposés selon les lignes basses (17), en ce que l'abri est délimité dans sa périphérie par une ceinture constituée de poteaux périphériques (13) munis dans leur partie supérieure d'un passage (18) permettant la disposition d'un câble périphérique (15) et équipé partiellement ou intégralement d'un filet périphérique (14), seuls les poteaux périphériques (13) étant ancres au sol grâce à des câbles prenant appui dans des plots d'ancrage (7) en béton et en ce que la disposition de tous les câbles (6,12,15) dans les poteaux (1,13) est rendue fixe grâce à des serre-câbles (5).

2. Abri pour cultures selon la revendication 1 caractérisé en ce que les câbles (6) disposes selon les lignes basses sont solidarises aux câbles (12) formant le réseau triangule au niveau de croisillons (10) correspondants aux intersections des câbles (12).

3. Abri pour cultures selon l'une des revendications 1 ou 2 caractérisé en ce que les filets (4) sont disposes parallèlement aux câbles (6) et possédent une longueur correspondant à la distance comprise entre une ligne de faîtage (16) et la ligne basse (17) voisine.

4. Abri pour cultures selon l'une des revendications 1 à 3 caractérisé en ce que les filets (4) sont solidarises aux câbles (6) par des agrafes munies d'un crochet.

5. Abri pour cultures selon l'une des revendications 1 à 4 caractérisé en ce que la hauteur des poteaux (13) une fois positionnés correspond sensiblement à la hauteur à laquelle se situent les lignes basses (17).

6. Abri pour cultures selon la revendication 5 caractérisé en ce que les poteaux périphériques (13) sont positionnes verticalement.

7. Abri pour cultures selon la revendication 5 caractérisé en ce que les poteaux périphériques (13) sont positionnés de façon à être inclinés vers l'extérieur de l'abri.

8. Abri pour cultures selon l'une des revendications 1 à 7 caractérisé en ce que chaque poteau périphérique (13) est solidarisé au sol par deux câbles de tension (19) formant un tripode reliés à des chaines de tension (8) elles-mêmes reliées aux plots d'ancrage (7).

9. Abri pour cultures selon l'une des revendications 1 à 8 caractérisé en ce que les câbles (12) du réseau triangulé et les câbles (6) sont terminés à chacune de leurs extrémités par une élingue (20) permettant leur accrochage aux poteaux périphériques (13).

10. Abri pour cultures selon la revendication 9 caractérisé en ce que les poteaux périphériques (13) sont munis en leur extrémité supérieure d'un trou (21) équipé d'une clavette (22) améliorant la fixation des élingues (20).

11. Abri pour cultures selon l'une des revendications 1 à 10 caractérisé en ce que d'une part la distance sur chaque poteau (1) entre les passages (11a,11b) permettant la formation du réseau triangulé de câbles (12) et, d'autre part, la distance entre les lignes de faîtage (16) et les lignes basses (17) sont telles que la pente des filets (4) est comprise entre 5 et 15%.

FIG.1

FIG.2

FIG.3

FIG.4

FIG.5

Office européen
des brevets

**RAPPORT DE RECHERCHE EUROPEENNE**

Numero de la demande

EP 91 40 2742

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 214 398 (SOCIETE INDUSTRIELLE ET FINANCIERE, LE PROFIL) <br> * page 3, ligne 9 - page 4, ligne 8; figures 1,10,11 * <br> --- | 1,3,6,8 | A 01 G 9/14 |
| A | GB-A-2 062 050 (IMPERIAL CHEMICAL INDUSTRIES LIMITED) <br> * page 2, lignes 33-78; figures 1-3 * <br> --- | 1,3,8 | |
| A | US-A-2 143 659 (J.K. MORRISON) <br> * page 1, colonne 2, lignes 23-50; figure 1 * <br> --- | 1,3,6,8 | |
| A | FR-A-2 430 531 (ERAM INDUSTRIE) <br> * figures 1-4 * <br> --- | 9 | |
| A | FR-A-2 403 014 (P. BENOIT) <br> * figure 1 * <br> ----- | | |

**DOMAINES TECHNIQUES RECHERCHES (Int. Cl.5)**

A 01 G

Le présent rapport a été établi pour toutes les revendications

| Lieu de la recherche | Date d'achèvement de la recherche | Examinateur |
|---|---|---|
| BERLIN | 12-12-1991 | MARTIN DEL RIO A |

EPO FORM 1503 03.82 (P0402)